# EUROPÄISCHE PATENTSCHRIFT

(11) **EP 0 407 719 B1**
(45) Veröffentlichungstag und Bekanntmachung des Hinweises auf die Patenterteilung: **07.07.1993**
(21) Anmeldenummer: 90110226.9
(22) Anmeldetag: 30.05.1990
(51) Int. Cl.: B60B 27/00, F16B 39/02

(54) **Radlager für Anhängerachsen**
Axle bearing for trailer wheels
Palier pour essieux de roues de remorque

(30) Priorität: 12.07.1989 DE 3922858
(43) Veröffentlichungstag der Anmeldung: 16.01.1991
(73) Patentinhaber: Bergische Achsenfabrik Fr. Kotz & Söhne, 51674 Wiehl (DE)
(72) Erfinder: Laudszun, Heinz, Dr., D-5276 Wiehl (DE); Leidig, Hans Josef, D-5226 Reichshof (DE); Steiner, Helmut, D-5276 Wiehl (DE)
(74) Vertreter: Stenger, Watzke & Ring Patentanwälte

(56) Entgegenhaltungen:
- DE-A- 2 228 062
- DE-B- 1 675 685
- DE-C- 207 648
- FR-A- 2 408 753
- US-A- 4 121 871

## Beschreibung

Gegenstand der Erfindung ist ein Radlager für Anhängerachsen mit auf einem Achsschenkel angeordneten Kegelrollenlagern und einer darauf drehbar gelagerten Nabe zum Befestigen einer Bremstrommel und eines Rades, wobei zwischen dem inneren Kegelrollenlager und dem Achsschenkel ein Stoßring angeordnet ist und vor dem äußeren Kegelrollenlager eine Achsmutter auf ein Außengewinde des Achsschenkels aufgeschraubt ist

Die Radlager für Anhängerachsen müssen so konstruiert sein, daß die Nabe mit der daran befestigten Bremstrommel vom Achsschenkel abgezogen werden können, um die Bremse zu warten, beispielsweise die Bremsbeläge zu erneuern Wenn ein herkömmliches Radlager mit einer einteiligen Nabe nach dem Entfernen der Achsmutter vom Achsschenkel abgezogen wird, müssen die beiden Kegelrollenlager und der Stoßring sowie diverse Dichtungen getrennt von der Nabe demontiert und danach auch wieder montiert werden. Außerdem ist es notwendig, die Fettfüllung des Radlagers zu erneuern. Um diese umständliche Arbeitsweise zu vermeiden, ist in der DE-A 36 43 081 schon ein, gattungsgemäßes Radlager vorgeschlagen worden, bei dem die Nabe aus einer Innennabe mit einer darauf drehfest befestigten Außennabe besteht, die aber mit der daran befestigten Bremstrommel von der Innennabe abgezogen werden kann, während die Innennabe mit der Achsmutter, den Kegelrollenlagern und dem Stoßring auf dem Achsschenkel verbleiben. Diese bekannten Radlager mit einer Doppelnabe sind Jedoch sehr aufwendig in der Herstellung, wenn sie einwandfrei funktionieren und kein Sicherheitsrisiko darstellen sollen.

Aus der DE-A 25 05 081 ist eine Anordnung zur Lagerung eines Fahrzeugrades mit einem eine Lagerbohrung aufweisenden äußeren Lagerteil und einem mittels eines Wälzlagers in der Lagerbohrung gelagerten, den Achszapfen enthaltenden inneren Lagerteil, wobei das eine Lagerteil mit dem Fahrzeugrad und das andere Lagerteil mit am Fahrzeugaufbau angelenkten Radführungsgliedern in Verbindung steht, bekannt. Dabei ist der Außenring des Wälzlagers hier in der Lagerbohrung des äußeren Lagerteiles mit Hilfe zweier Sprengringe fixiert. Die Demontage der Nabe und der Wälzlager ist hier nur mit großem Aufwand möglich.

Davon ausgehend liegt der Erfindung die **Aufgabe** zugrunde, ein einfach konstruiertes Radlager mit einer einteiligen Nabe zu schaffen, dessen Nabe mit den eingesetzten Kegelrollenlagern, Stoßring und Achsmutter vormontiert und als Einheit auf dem Achsschenkel montiert und auch wieder demontiert werden kann.

Als technische **Lösung** wird dafür vorgeschlagen, daß der Stoßring mit einem ersten Sprengring in der Nabe gesichert ist, daß die Achsmutter einen bis an die Innenwand der Nabe heranreichenden Bund hat und daß die Achsmutter an ihrem Bund mit einem zweiten Sprengring in der Nabe gesichert ist.

Ein nach dieser technischen Lehre ausgebildetes Radlager hat den **Vorteil**, daß die Nabe, die beiden Kegelrollenlager, der Stoßring und die Achsmutter nach der Vormontage mit den beiden Sprengringen eine Konstruktionseinheit bilden, die insgesamt auf dem Achsschenkel montiert und auch von diesem wieder abgezogen werden kann. Ein besonderer Vorteil besteht dabei darin, daß nicht nur das Aufschieben der Nabeneinheit auf den Achsschenkel in die endgültige Position der Kegelrollenlager mit der Achsmutter geschieht, sondern die Achsmutter bei der Demontage gleichzeitig als Abziehwerkzeug benutzt werden kann, weil sie sich in der Nabe frei drehen kann und ihr Bund den in die Nabe eingreifenden zweiten Sprengring hintergreift.

Bei einer praktischen Ausführungsform kann die Achsmutter mit einem nahe der Außenseite angeordneten, radialen Schlitz versehen und der freistehende, federnde Teil mit wenigstens einer Klemmschraube gegen den innenliegenden Teil der Achsmutter verspannbar sein. Eine so ausgebildete Achsmutter, bei welcher der Schlitz in bevorzugter Ausführungsform bis zur Mittelachse reicht und im Bereich des federnden Teiles zwei Klemmschrauben angeordnet sind, wird eine hervorragende Sicherung des fertig montierten Radlagers bewirkt.

Auch der Stoßring kann mit einem bis an die Innenwand der Nabe heranreichenden Bund versehen sein, der den ersten Sprengring hintergreift.

Schließlich besteht eine Weiterbildung der Erfindung noch darin, daß zwischen einem nach innen ragenden Ansatz der Nabe und dem Innenring des äußeren Kegelrollenlagers eine ringförmige Ablaufsicherung angeordnet wird, die sich einerseits an der Nabe und andererseits am Innenring des äußeren Kegelrollenlagers abstützt.

Weitere Einzelheiten und Vorteile ergeben sich aus der nachfolgenden Beschreibung der zugehörigen Zeichnungen, in denen eine bevorzugte Ausführungsform eines erfindungsgemäß ausgebildeten Radlagers schematisch dargestellt worden ist. In den Zeichnungen zeigen:

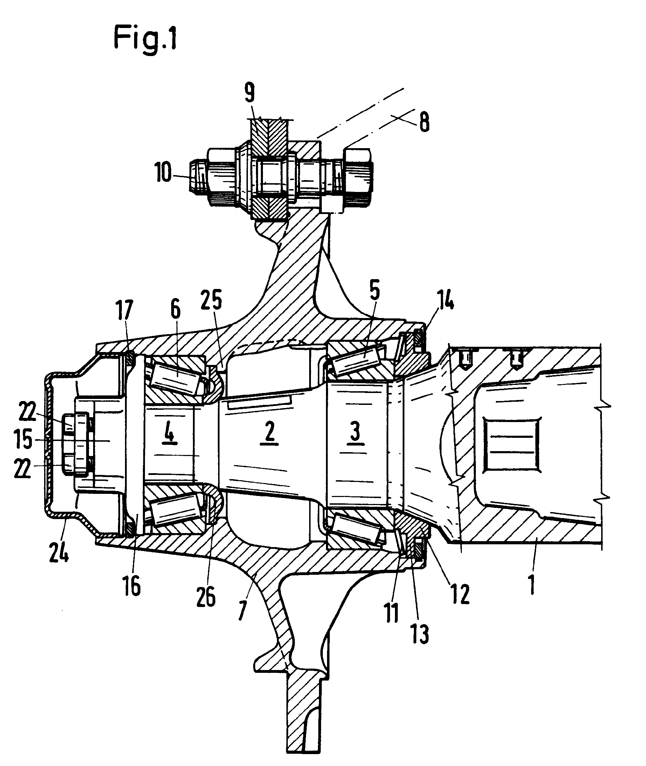

- Fig. 1: ein auf einem Achsschenkel montiertes Radlager im Längsschnitt;
- Fig. 2: eine vormontierte oder vom Achsschenkel abgezogene Nabe im Längsschnitt;
- Fig. 3: eine Achsmutter in Draufsicht;
- Fig. 4: dieselbe Achsmutter entlang der Linie IV-IV in Fig. 3 geschnitten.

Am Ende eines Achskörpers 1 ist ein Achsschenkel 2 befestigt oder angeformt, der mit zwei im Abstand voneinander angeordneten Lagersitzen 3,4 für ein inneres Kegelrollenlager 5 und ein äußeres Kegelrollenlager 6 versehen ist. Zwischen den beiden Kegelrollenlagern 5,6 ist der Achsschenkel 2 konisch ausgebildet.

Auf den beiden Kegelrollenlagern 5,6 ist eine einteilig ausgebildete Nabe 7 frei drehbar gelagert. Am äußeren Umfang der Nabe 7 können auf einer Seite eine Bremstrommel 8 und auf der gegenüberliegenden Seite ein Rad 9 mit Radbolzen 10 befestigt werden.

Auf der Außenseite des inneren Kegelrollenlagers 5 sind ein Dichtring 11 und ein Stoßring 12 angeordnet. Der Stoßring 12 ist an seinem äußeren Umfang mit einem bis an die Innenwand der Nabe 7 heranreichenden Bund 13 versehen. Vor dem Bund 13 ist ein erster Sprengring 14 in eine innen umlaufende Hut der Nabe 7 eingesetzt.

Am anderen Ende ist vor dem äußeren Kegelrollenlager 6 eine Achsmutter 15 mit einem angeformten Bund 16 angeordnet, der bis an die Innenwand der Nabe 7 heranreicht. Außen vor dem Bund 16 ist in eine umlaufende Hut der Nabe 7 ein zweiter Sprengring 17 eingesetzt.

Die Achsmutter 15 ist im Bereich ihres mit Schraubflächen 18 versehenen Teiles mit einem Schlitz 19 versehen, der bis zur Mittelachse herabreicht Ein dadurch entstehender, federnder Teil 20 ist mit zwei Bohrungen 21 versehen, in die Klemmschrauben 22 gesteckt und in Gewindebohrungen 23 eingeschraubt werden können.

Die Öffnung der Nabe 7 wird mit einer Radkapsel 24 verschlossen.

Zwischen einem nach innen ragenden Ansatz 25 der Nabe 7 und dem Innenring des äußeren Kegelrollenlagers 6 ist eine ringförmige Ablaufsicherung 26 angeordnet.

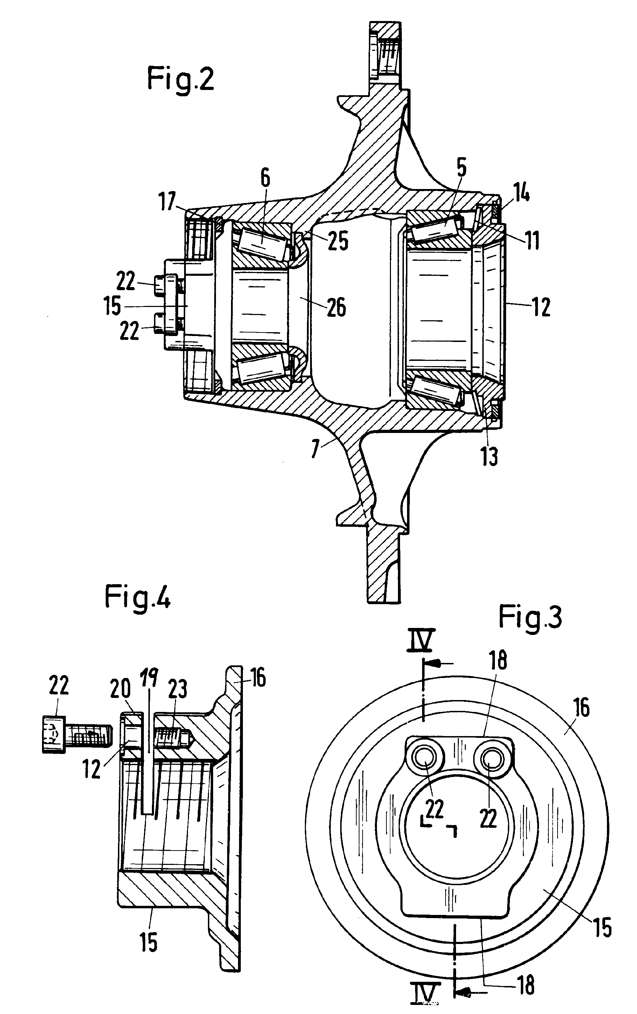

Die Nabe 7, die beiden Kegelrollenlager 5 und 6, der Dichtring 11, der Stoßring 12, die innenliegende Ablaufsicherung 26 und die Achsmutter 15 können mit den beiden Sprengringen 14,17 so vormontiert werden, wie es in der Fig. 2 dargestellt worden ist. Diese vormontierte Nabeneinheit kann insgesamt auf den Achsschenkel 2 aufgesteckt und durch Aufschrauben der Achsmutter 15 auf ein Gewindeende des Achsschenkels 2 so weit aufgezogen werden, bis die beiden Kegelrollenlager 5,6 ihre endgültige Position erreicht Naben und der Stoßring 12 einem inneren Konus des Achsschenkels 2 anliegt. In dieser Betriebsposition wird die Achsmutter 15 mit den beiden Klemmschrauben 22 auf dem Gewindeende des Achsschenkels 2 fixiert.

Zur Demontage der Nabeneinheit von dem Achsschenkel 2 werden zunächst die beiden Klemmschrauben 22 gelöst. Mit der auf dem Achsschenkel 2 sich abstützenden und den zweiten Sprengring 17 hintergreifenden Achsmutter 15 kann sodann die Nabeneinheit von dem Achsschenkel 2 abgezogen werden.

Mit einer erfindungsgemäß ausgebildeten Nabeneinheit gestalten sich Montage und Demontage der Radnabe überraschend einfach. Die vor der Montage in den Hohlraum der Nabe 7 zwischen den beiden Kegelrollenlagern 5,6 eingebrachte Fettfüllung muß bei einer Demontage zur Wartung der Bremsen nicht erneuert werden. Auch eine Erneuerung der Fettfüllung in der Radkapsel 24 ist bei einer Demontage nicht unbedingt notwendig. Eine Nachfettung kann aber zweckmäßig sein.

### Bezugszeichenliste

- 1: Achskörper
- 2: Achsschenkel
- 3: Lagersitz
- 4: Lagersitz
- 5: Kegelrollenlager (inneres)
- 6: Kegelrollenlager (äußeres)
- 7: Nabe
- 8: Bremstrommel
- 9: Rad
- 10: Radbolzen
- 11: Dichtring
- 12: Stoßring
- 13: Bund
- 14: Sprengring (erster)
- 15: Achsmutter
- 16: Bund
- 17: Sprengring (zweiter)
- 18: Schraubflächen
- 19: Schlitz
- 20: Teil
- 21: Bohrung
- 22: Klemmschrauben
- 23: Gewindebohrung
- 24: Radkapsel
- 25: Ansatz
- 26: Ablaufsicherung

## Patentansprüche

1. Radlager für Anhängerachsen mit auf einem Achsschenkel (2) angeordneten Kegelrollenlagern (5,6) und einer darauf drehbar gelagerten Nabe (7) zum Befestigen einer Bremstrommel (8) und eines Rades (9), wobei zwischen dem inneren Kegelrollenlager (5) und dem Achsschenkel (2) ein Stoßring (12) angeordnet ist und vor dem äußeren Kegelrollenlager (6) eine Achsmutter (15) auf ein Außengewinde des Achsschenkels (2) aufgeschraubt ist,
**dadurch gekennzeichnet,**
daß der Stoßring (12) mit einem ersten Sprengring (14) in der Nabe (7) gesichert ist,
daß die Achsmutter (15) einen bis an die Innenwand der Nabe (7) heranreichenden Bund (16) hat und
daß die Achsmutter (15) an ihrem Bund (16) mit einem zweiten Sprengring (17) in der Nabe (7) gesichert ist.

2. Radlager nach Anspruch 1, dadurch gekennzeichnet, daß die Achsmutter (15) mit einem nahe der Außenseite angeordneten, radialen Schlitz (19) versehen ist und daß der freistehende, federnde Teil (20) mit wenigstens einer Klemmschraube (22) gegen den innenliegenden Teil der Achsmutter (15) verspannbar ist.

3. Radlager nach den Ansprüchen 1 und 2, dadurch gekennzeichnet, daß der Schlitz (19) bis zur Mittelachse der Achsmutter (15) reicht.

4. Radlager nach den Ansprüchen 1 bis 3, dadurch gekennzeichnet, daß im Bereich des federnden Teiles (20) zwei Klemmschrauben (22) angeordnet sind.

5. Radlager nach Anspruch 1, dadurch gekennzeichnet, daß der Stoßring (12) mit einem bis an die Innenwand der Nabe (7) heranreichenden Bund (13) versehen ist, der den ersten Sprengring (14) hintergreift.

6. Radlager nach Anspruch 1, dadurch gekennzeichnet, daß zwischen einem nach innen ragenden Ansatz (25) der Nabe (7) und dem Innenring des äußeren Kegelrollenlagers (6) eine ringförmige Ablaufsicherung (26) angeordnet ist.

## Claims

1. Wheel bearing for trailer axles having tapered roller bearings (5, 6) disposed on an axle journal (2) and having a hub (7) rotatably mounted thereon for fastening a brake drum (8) and a wheel (9), a thrust washer (12) being disposed between the inner tapered roller bearing (5) and the axle journal (2) and, in front of the outer tapered roller bearing (6), an axle nut (15) being screwed onto an external thread of the axle journal (2), characterised in that the thrust washer (12) is secured in the hub (7) by means of a first snap ring (14), in that the axle nut (15) has a collar (16) reaching up to the inner wall of the hub (7) and in that the axle nut (15) is secured in the hub (7) by its collar (16) by means of a second snap ring (17).

2. Wheel bearing according to Claim 1, characterised in that the axle nut (15) is provided with a radial slot (19) disposed close to the outer side and in that the free-standing, resilient part (20) can be braced by at least one clamping screw (22) against the innermost part of the axle nut (15).

3. Wheel bearing according to Claims 1 and 2, characterised in that the slot (19) reaches up to the centre axis of the axle nut (15).

4. Wheel bearing according to Claims 1 to 3, characterised in that two clamping screws (22) are disposed in the area of the reslient part (20).

5. Wheel bearing according to Claim 1, characterised in that the trust washer (12) is provided with a collar (13) which reaches up to the inner wall of the hub (7) and back-grips the first snap ring (14).

6. Wheel bearing according to Claim 1, characterised in that an annular run-off protection (26) is disposed between an inwardly projecting protrusion (25) of the hub (7) and the inner ring of the outer tapered roller bearing (6).

## Revendications

1. Palier pour essieux de roues de remorque, comprenant des roulements à rouleaux coniques (5, 6) montés sur une fusée d'essieu (2) et un moyeu (7) monté en rotation sur lesdits roulements et destiné à recevoir un tambour de frein (8) et une roue (9), un anneau (12) formant joint étant disposé entre le roulement intérieur (5) à rouleaux coniques et la fusée d'essieu (2), et un écrou d'essieu (15) étant vissé sur un filetage extérieur de la fusée d'essieu (2) devant le roulement extérieur (6) à rouleaux coniques, caractérisé en ce que l'anneau (12) formant joint est immobilisé dans le moyeu (7) par un premier circlip (14), en ce que l'écrou d'essieu (15) possède une collerette (16) qui s'étend jusqu'à la paroi intérieure du moyeu (7), et en ce que l'écrou d'essieu (15) est immobilisé dans le moyeu (7), au niveau de sa collerette (16), par un second circlip (17).

2. Palier de roue selon la revendication 1, caractérisé en ce que l'écrou d'essieu (15) est pourvu d'une fente radiale (19) située à proximité du côté extérieur, et en ce que la partie élastique séparée (20) peut être serrée contre la partie intérieure de l'écrou d'essieu (15) avec au moins une vis de serrage (22).

3. Palier de roue selon les revendications 1 et 2, caractérisé en ce que la fente (19) atteint l'axe médian de l'écrou d'essieu (15).

4. Palier de roue selon les revendications 1 à 3, caractérisé en ce que deux vis de serrage (22) sont prévues dans la zone de la partie élastique (20).

5. Palier de roue selon la revendication 1, caractérisé en ce que l'anneau (12) formant joint est pourvu d'une collerette (13) qui s'étend jusqu'à la paroi intérieure du moyeu (7) et qui s'engage derrière le premier circlip (14).

6. Palier de roue selon la revendication 1, caractérisé en ce que, entre un épaulement (25) du moyeu (7), ledit épaulement (25) faisant saillie vers l'intérieur, et la bague intérieure du roulement extérieur (6) à rouleaux coniques, est inséré un élément de blocage annulaire (26).
